Europäisches Patentamt

European Patent Office

Office européen des brevets

(19)

(11) **EP 1 398 678 A1**

(12) **DEMANDE DE BREVET EUROPEEN**

(43) Date de publication:
**17.03.2004 Bulletin 2004/12**

(51) Int Cl.⁷: **G05B 19/042**, G05B 23/02

(21) Numéro de dépôt: **03292250.2**

(22) Date de dépôt: **12.09.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(30) Priorité: **13.09.2002 FR 0211384**

(71) Demandeur: **Renault S.A.**
**92100 Boulogne Billancourt (FR)**

(72) Inventeur: **Albertus, Sébastien**
**78180 Montigny le Bretonneux (FR)**

(54) **Procédé de diagnostic d'un ensemble de commande, notamment pour véhicule automobile, et dispositif de diagnostic associé**

(57) Dans un procédé de diagnostic d'un ensemble de commande 1, notamment pour véhicule automobile, comprenant une pluralité de calculateurs C1, ..., C4 reliés entre eux par un bus de communication 2, on interroge chaque calculateur C1, ..., C4 par l'intermédiaire du bus de communication 2 pour déterminer quels sont les autres calculateurs avec lesquels ledit calculateur C1, ..., C4 peut échanger des données par l'intermédiaire du bus de communication 2, pour localiser une défaillance de l'ensemble de commande.

FIG_1

## Description

La présente invention concerne un procédé de diagnostic d'un ensemble de commande, notamment pour véhicule automobile, et un dispositif de diagnostic associé.

Dans les véhicules automobiles modernes, les différents équipements embarqués (moteur, suspensions, climatisation, radio, fermeture centralisée des ouvrants, tableau de bord, ordinateur de bord, coussins gonflables, correcteur de trajectoire, assistance au freinage, anti-blocage de freins, etc.) sont pilotés à l'aide d'une pluralité de calculateurs en communication par l'intermédiaire d'un bus de communication.

On peut utiliser un bus de communication commun du type bifilaire différentiel, fonctionnant selon un protocole de communication CAN. Dans ce cas, chaque calculateur est relié au bus de communication commun et prélève les informations circulant sur le bus de communication et qui lui sont destinées, et identifiées par exemple à l'aide d'octets d'identification placés en début des trames de données.

Lorsqu'un équipement ne fonctionne plus, il se peut que la défaillance provienne du calculateur qui commande l'équipement. Cependant, certains calculateurs ne sont pas dédiés spécifiquement à la gestion d'un équipement. Les ressources d'un calculateur peuvent être utilisées pour la gestion de plusieurs équipements. De même, un équipement peut être géré simultanément par plusieurs calculateurs. Une telle architecture d'un ensemble de commande d'un véhicule automobile permet notamment de disposer au mieux les calculateurs dans le véhicule automobile sans qu'il soit nécessaire d'associer un calculateur à chaque équipement, et de limiter un nombre de capteurs ou un nombre de connexions à un capteur. Par exemple, la gestion d'un dispositif de climatisation peut faire intervenir un calculateur par ailleurs utilisé pour la gestion du moteur, afin de connaître des températures de fonctionnement du moteur, ainsi qu'un calculateur par ailleurs utilisé pour la gestion du tableau de bord, pour connaître une température intérieure dans l'habitacle.

Dès lors, si un équipement est commandé par plusieurs calculateurs simultanément, on ne peut pas savoir à priori quel calculateur est défaillant, et entraîne la défaillance de l'équipement.

On peut raccorder sur un bus de diagnostic des dispositifs de diagnostic sous la forme de calculateurs capables d'interroger les différents calculateurs embarqués du véhicule par le biais du bus de diagnostic pour savoir quel calculateur est défaillant. Le bus de diagnostic est un bus parallèle au bus de communication, et dédié au diagnostic des calculateurs. L'implantation d'un bus de diagnostic parallèle rend un réseau de connexion du véhicule automobile plus complexe et plus coûteux. Par ailleurs, l'interrogation des calculateurs par un bus de communication ne permet pas de savoir si une défaillance provient dudit bus de communication et d'où provient la défaillance sur le bus de communication.

On peut envisager d'effectuer un diagnostic en connectant un outil de diagnostic directement sur le bus de communication. Cependant, selon l'architecture d'un ensemble de commande, certains calculateur, reliés au bus de communication par l'intermédiaire d'un autre calculateur défaillant, ne pourront être interrogés, empêchant un diagnostic complet de l'ensemble de commande.

En outre, de tels outils de diagnostic ne permettent pas de détecter une défaillance du bus de communication lui-même. En cas de défaillance du bus de communication, les dispositifs de diagnostic peuvent ne pas être capables de communiquer avec certains calculateurs, ce qui aura pour conséquence d'empêcher l'établissement d'un diagnostic.

La présente invention a pour objet un procédé de diagnostic d'un ensemble de commande, notamment pour véhicule automobile, permettant d'établir un diagnostic de calculateurs et d'un bus de communication reliant les calculateurs.

La présente invention a également pour objet un procédé de diagnostic d'un ensemble de commande permettant la localisation d'une défaillance d'un calculateur ou du bus de communication, ainsi que la caractérisation d'une défaillance.

Dans un tel procédé de diagnostic d'un ensemble de commande, notamment pour véhicule automobile, comprenant une pluralité de calculateurs reliés entre eux par un bus de communication, on interroge chaque calculateur par l'intermédiaire du bus de communication pour déterminer quels sont les autres calculateurs avec lesquels ledit calculateur peut échanger des données par l'intermédiaire du bus de communication.

Ainsi, en connaissant une architecture de l'ensemble de commande, on peut localiser une défaillance de l'ensemble de commande, que cela soit une défaillance d'un calculateur ou d'une section du bus de communication. En effet, si aucun calculateur ne peut communiquer avec un calculateur donné par l'intermédiaire du bus de communication, on peut déterminer que ce calculateur donné et/ou sa section de raccordement sur le bus de communication est défaillante.

Dans un mode de mise en oeuvre, on détermine une section de l'ensemble de commande comme défaillante en fonction du nombre de communications entre calculateurs devant transiter par cette section, et du nombre de communications effectivement établies. On détermine ainsi la probabilité qu'une section soit une section défaillante en fonction du nombre de communications passant par cette section et qui n'ont pu être établies. Ce mode de mise en oeuvre est adapté pour des architectures d'ensemble de commande complexes.

Dans un mode de mise en oeuvre, le bus de communication étant du type bifilaire différentiel, pendant une transmission de données par l'intermédiaire du bus de communication, on effectue des mesures de grandeurs électriques caractéristiques indépendamment sur chacun des fils du bus de communication, pour caractériser une défaillance éventuelle du bus de communication.

Sur un bus de communication bifilaire différentiel, fonctionnant par exemple selon un protocole CAN, les données sont codées sous la forme d'une différence de potentiel entre les deux fils du bus de communication. Un tel bus de communication, sans potentiel de référence fixe, permet de s'affranchir de fluctuations de potentiel sur les fils. En cas de défaillance du bus de communication ou d'un calculateur relié au bus de communication, des fluctuations de grandeurs électriques peuvent apparaître sur un fil ou les deux fils simultanément. La mesure de grandeurs électriques, indépendamment sur chacun des fils du bus de communication, permet de caractériser une défaillance du bus de communication, même si aucune donnée ne peut être transmise par l'intermédiaire du bus de communication par exemple en cas de court-circuit.

Dans un mode de mise en oeuvre, on mesure les tensions maximales et minimales sur les fils du bus de communication. Lors de transmission de données par l'intermédiaire du bus de communication, fonctionnant par exemple selon la norme CAN, des signaux en créneaux sont transmis sur les fils du bus de communication. Les signaux en créneaux varient entre une tension maximale et une tension minimale. La mesure des tensions maximales et minimales apparentes sur les fils du bus de communication, permet de comparer les signaux transmis par les fils du bus de communication pour pouvoir détecter des ouvertures dans le bus de communication ou des courts-circuits.

Dans un mode de mise en oeuvre, pour obtenir une mesure pertinente d'une grandeur électrique sur un fil du bus de communication, on effectue des mesures pendant un intervalle de temps supérieur à une période caractéristique des signaux de communication transmis par le bus de communication, et on effectue une moyenne des mesures réalisées pendant l'intervalle de temps. En effet, les tensions sur les fils du bus de communication bifilaire peuvent être soumises à des fluctuations. Par ailleurs, les signaux de communication codant des informations possèdent une forme générale sensiblement en créneau avec une alternance irrégulière de créneau. Dès lors, en effectuant une moyenne sur un intervalle de temps suffisamment grand, on peut considérer que l'on obtient une mesure pertinente des tensions maximales et minimales apparentes sur les fils du bus de communication. Un filtrage supplémentaire peut permettre de s'affranchir de fluctuations de tension sur le bus de communication différentiel.

Dans un mode de mise en oeuvre, on compare des valeurs de tensions mesurées à des seuils de tension déterminés en fonction de tensions d'alimentation, notamment pour déterminer un diagnostic de court-circuit entre un fil du bus de communication et une alimentation générale de l'ensemble de commande.

Dans un mode de mise en oeuvre, on compare les écarts entre les tensions maximales et minimales mesurées sur chaque fil du bus de communication, entre eux ou avec des seuils déterminés, notamment pour déterminer un diagnostic d'ouverture sur un ou plusieurs fils du bus de communication au niveau d'une prise de mesure.

Dans un mode de mise en oeuvre, on compare des positions relatives des signaux de transmission de données transmis par les fils du bus de communication, en comparant les positions relatives des grandeurs caractéristiques mesurées.

Pour ce faire on peut comparer les tensions maximales et minimales mesurées sur les fils du bus de communication avec une tension moyenne du bus de communication, notamment pour établir un diagnostic d'ouverture ou non sur les fils du bus de communication, ou de perte de masse d'un ou plusieurs calculateurs. On peut, par exemple, obtenir la tension moyenne du bus de communication comme la moitié de la somme de la tension maximale mesurée sur un fil de haute tension et de la tension minimale mesurée sur un fil de basse tension du bus de communication.

Pour caractériser les positions relatives des signaux, on peut également comparer la différence entre des tensions mesurées et une tension moyenne avec une amplitude entre les tensions mesurées.

On peut définir une amplitude comme étant égale à la différence entre la tension maximale mesurée sur un fil de haute tension du bus de communication et une tension moyenne mesurée du bus de communication.

En cas de défaillance du bus de communication interdisant une transmission de données par l'intermédiaire du bus de communication, on peut prévoir de débrancher une section du bus de communication, et de réitérer le procédé de diagnostic en tenant compte de la section débranchée. Ainsi, on peut déterminer si la section débranchée comprend au moins une portion défaillante. En effet, si en réitérant le procédé on ne peut détecter de défaillance, cela signifie que la défaillante est localisée dans cette section débranchée. Des itérations successives peuvent permettre de localiser la portion défaillante.

L'invention concerne également un dispositif de diagnostic pour un ensemble de commande, notamment pour véhicule automobile, comprenant une pluralité de calculateurs reliés entre eux par un bus de communication bifilaire du type différentiel, et comprenant un module de mesure de grandeurs électriques sur chacun des fils du bus de communication, et un module de diagnostic comprenant des moyens-mémoire sur lesquels est stocké un programme d'ordinateur comprenant des étapes de logiciel pour la mise en oeuvre d'un procédé de diagnostic selon un aspect de l'invention.

La présente invention et ses avantages seront mieux compris à l'étude de la description détaillée d'un mode de réalisation pris à titre d'exemple nullement limitatif, et illustrée par les dessins annexés, sur lesquels :

- la figure 1 est une vue schématique d'un ensemble de commande de véhicule automobile ;
- la figure 2 représente un graphique illustrant des signaux de transmission de données sur des fils d'un bus de communication différentiel bifilaire ;
- la figure 3 est un schéma-bloc reprenant des étapes de diagnostic d'un ensemble de commande selon la figure 1 ; et
- la figure 4 est un schéma-bloc détaillant certaines étapes du schéma de la figure 3.

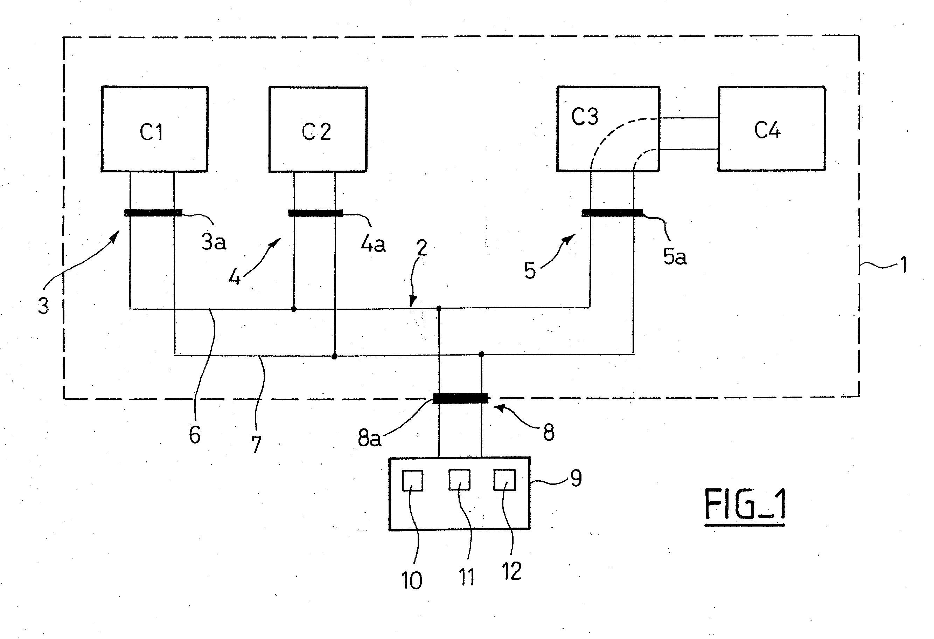

Sur la figure 1, un ensemble de commande, référencé 1 dans son ensemble et délimité par des pointillés, est disposé dans un véhicule automobile non représenté pour des raisons de clarté des dessins. L'ensemble de commande 1 contrôle et commande une pluralité d'équipements embarqués du véhicule automobile.

L'ensemble de commande 1 comprend une pluralité de calculateurs, ici au nombre de quatre, et référencés C1, C2, C3 et C4. Les calculateurs C1 à C4 ne sont pas dédiés chacun à la gestion d'un équipement embarqué particulier, mais participent conjointement à la gestion de l'ensemble des équipements, en fonction de leurs ressources (données disponibles, programmes chargés...).

Un bus de communication bifilaire principal, référencé 2 dans son ensemble, permet de relier les calculateurs C1, C2, C3, qui se raccordent sur le bus bifilaire 2 par l'intermédiaire de prises, respectivement 3, 4, 5. Chaque prise 3, 4, 5 comprend un connecteur 3a, 4a, 5a, et des fils de raccordement du connecteur sur le bus de communication 2 et du côté opposé des fils de raccordement du connecteur avec le calculateur correspondant C1, C2, C3. Les connecteurs 3a, 4a, 5a peuvent être débranchés pour déconnecter les calculateurs C1, C2, C3 du bus de communication 2. Le calculateur C3 sert de relais pour le calculateur C4, disposé en série avec le calculateur C3, en aval de la prise 5 correspondante.

Par la suite, on désignera par bus de communication 2 l'ensemble du bus de communication principal 2 et des dérivations vers les calculateurs C1 à C4. Le bus de communication bifilaire différentiel 2 comprend un fil de haute tension 6 et un fil de basse tension 7.

Une prise extérieure 8 comprend un connecteur 8a permettant de raccorder un dispositif de diagnostic 9 extérieur sur le bus de communication 2. La prise extérieure 8 se situe sur le bus de communication 2 entre d'un côté les prises 3, 4 des calculateurs C1, C2, et, de l'autre côté, la prise 5 de raccordement du calculateur C3.

Le dispositif de diagnostic 9 comprend un module de communication 10, capable d'échanger des données avec les calculateurs C1 à C4 lorsque dispositif de diagnostic 9 est relié au bus de communication 2, un module de mesure du bus de communication 11, prévu pour réaliser des mesures de grandeurs électriques indépendamment sur chaque fil du bus de communication, et un module de diagnostic 12, comprenant des moyens de calculs et des moyens-mémoire sur lesquels est enregistré un programme pouvant être exécuté par les moyens de calcul et comprenant des étages logiciels pour la mise en oeuvre d'un procédé de diagnostic du bus de communication 2, tel qu'il sera décrit par la suite.

Les calculateurs C1 à C4 sont alimentés de façon non représentée, par exemple à partir d'une batterie du véhicule automobile. L'énergie nécessaire au fonctionnement du bus de communication 2 est fournie par les calculateurs C1 à C4.

En fonctionnement, des données sont transmises sur le bus de communication 2, entre les différents calculateurs C1 à C4 qui commandent conjointement une pluralité d'équipement embarqué sur le véhicule automobile.

Dans un protocole de communication du type CAN, utilisant un bus de communication bifilaire en mode différentiel, les données sont codées sous la forme d'une différence entre des signaux électriques en créneaux transmis par les fils de haute tension 6 et de basse tension 7.

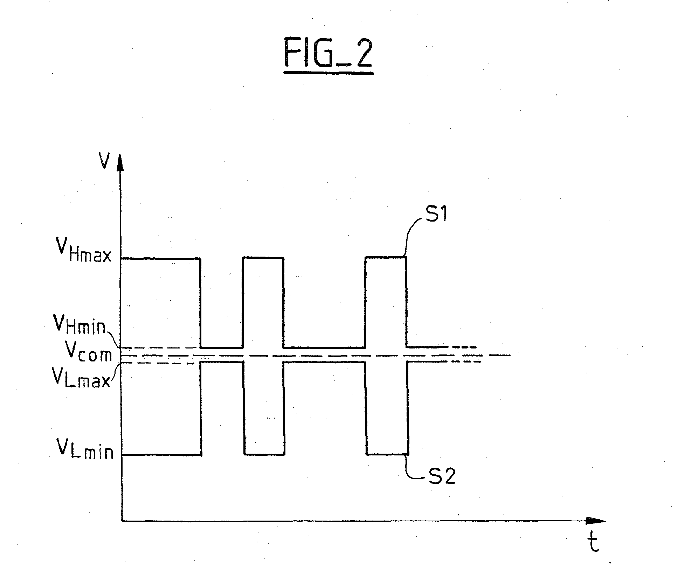

Des signaux de transmissions de données sont illustrées par la figure 2, en conservant les références utilisées pour la figure 1. Un signal en créneaux S1 est transmis par le fil de haute tension 6. Un signal de transmission correspondant S2 est transmis par le fil de basse tension 7.

Le signal S1 transmis sur le fil de haute tension 6 varie entre une tension maximale $V_{Hmax}$ et une tension minimale $V_{Hmin}$. Le signal correspondant S2 transmis sur le fil de basse tension 7 varie entre une tension maximale $V_{Lmax}$ et une tension minimale $V_{Lmin}$. Afin de détecter une différence entre les tensions des fils de haute tension 6 et de basse tension 7, on prévoit que la tension minimale du fil de haute tension 6 $V_{Hmin}$ est supérieure ou égale à la tension maximale du fil de basse tension 7, $V_{Lmax}$. Sur la figure 2, la tension minimale $V_{Hmin}$ sur le fil de haute tension 6 est sensiblement égale à la tension maximale $V_{Lmax}$ sur le fil de basse tension 7.

Un « 1 » sera codé lorsque le fil de haute tension 6 sera sensiblement à sa tension minimale $V_{Hmin}$, alors que le fil de basse tension 7 est simultanément à sa tension maximale $V_{Lmax}$. Un « 0 » sera codé lorsque le fil de haute tension 6 est à la tension maximale $V_{Hmax}$, alors que, simultanément, le fil de basse tension 7 est à la tension minimale $V_{Lmin}$. Selon les données transmises, codées par une succession de « 0 » et de « 1 », les signaux transmis sur les fils 6, 7 se présentent sous la forme d'une alternance de créneaux de largeur irrégulière.

Comme représenté sur la figure 2, les signaux S1, S2 transmis par les fils de haute tension 6 et de basse tension 7, en fonctionnement normal, sont sensiblement symétriques par rapport à une tension moyenne du bus de communication 2, désignée $V_{com}$. Dans ce cas, la tension moyenne $V_{com}$ est sensiblement égale à la tension minimale $V_{Hmin}$ du fil haute tension 6, et à la tension maximale $V_{Lmax}$ du fil de basse tension 7.

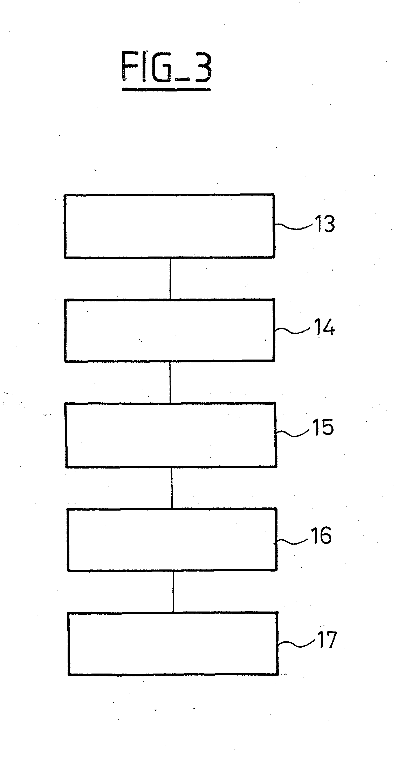

Lorsqu'un équipement du véhicule automobile est défaillant, on souhaite caractériser cette défaillance et connaître son emplacement afin de pouvoir remplacer, le cas échéant, un organe défaillant. Cependant, un équipement défaillant étant piloté par plusieurs calculateurs simultanément, la défaillance de cet équipement ne permet pas de déterminer que tel ou tel calculateur est défaillant. Le dispositif de diagnostic 9, branché sur le bus de communication 2 par l'intermédiaire de la prise extérieure 8, permet de caractériser et de localiser une défaillance dans l'ensemble de commande 1. Les étapes de diagnostic sont décrites par référence à la figure 3, en conservant les références des figures 1 et 2.

Lors d'une étape initiale 13, le module de communication 10 du dispositif de diagnostic 9, relié au bus de communication 2 par l'intermédiaire de la prise extérieure 8, interroge successivement chaque calculateur C1 à C4 afin de savoir avec quels autres calculateurs C1 à C4 il peut échanger des données par l'intermédiaire du bus de communication 2. Cette étape est réalisée en supposant que le dispositif de diagnostic 9 peut effectivement échanger des données avec au moins un calculateur C1 à C4 par l'intermédiaire du bus de communication 2.

Lors d'une étape 14 suivante, le dispositif de diagnostic 9 récupère une mesure de la tension de la batterie du véhicule $V_{bat}$. La tension de batterie $V_{bat}$ peut être mesurée par un opérateur et saisie sur un clavier du dispositif de diagnostic 9, ou récupérée par le dispositif de diagnostic 9 par l'intermédiaire d'un calculateur disposant de cette donnée et avec lequel le dispositif de diagnostic 9 peut communiquer. Le dispositif de diagnostic 9 enregistre ces données.

On notera que si la tension de batterie $V_{bat}$ est trop faible, le procédé de diagnostic peut être interrompu, pour éviter l'établissement d'un diagnostic erroné.

Ensuite, pendant des transmissions de données sur le bus de communication 2, le module de mesure 11 du dispositif de diagnostic 9 réalise des mesures de grandeurs électriques sur les fils de haute tension 6 et de basse tension 7 du bus de communication 2. Le dispositif de diagnostic 9 mesure la tension maximale apparente $V_{Hmax}$ sur le fil de haute tension 6, ainsi que la tension minimale apparente $V_{Hmin}$ sur le fil de tension 6. Le dispositif de diagnostic 9 mesure la tension maximale apparente $V_{Lmax}$ sur le fil de haute tension 7, ainsi que la tension minimale apparente $V_{Lmin}$ sur le fil de basse tension 7.

Bien entendu, par mesures effectuées pendant une transmission de données, on entend que les mesures sont effectuées dans le cas d'une transmission de données effective par le bus de communication 2, ou dans le cas où un calculateur essaye d'envoyer des données sur le bus de communication 2, alors que celui-ci est défaillant, et que cela entraîne une impossibilité de communication de données, ou une communication de données altérée.

Pour tenir compte de possibles fluctuations des tensions sur les fils de haute tension 6 et de basse tension 7, inhérentes au fonctionnement du bus de communication bifilaire différentiel 2, on filtre les signaux mesurés sur les fils de haute tension 6 et de basse tension 7. Par ailleurs, les tensions instantanées mesurées sur les fils de haute tension 6 et de basse tension 7 dépendent des signaux de transmission de données. Dès lors, pour obtenir des valeurs pertinentes des valeurs de tensions maximales et minimales, on effectue des mesures de tension maximales et minimales sur les fils de haute tension 6 et de basse tension 7 pendant un intervalle de temps supérieur à une période caractéristique des signaux de transmission de données. Par exemple, sur un bus de communication possédant une vitesse de transmission de 500 Kbit/s, on pourra prévoir de réaliser des mesures d'une tension pendant 500 ms. Ensuite, on réalise une moyenne des mesures réalisées pendant cet intervalle de temps pour déterminer les tensions maximales et minimales sur chaque fil 6, 7.

Les mesures des grandeurs électriques caractéristiques sont réalisées indépendamment sur chaque fil 6, 7. Etant donné que le but n'est pas de récupérer des signaux codant des successions de « 0 » et de « 1 », on peut effectuer les mesures sur les fils 6 et 7 à des instants

ou intervalles de temps différents. On peut éventuellement réaliser les mesures avec un échantillonnage différent de l'échantillonnage des signaux de communication.

On notera que, en cas d'inactivité du véhicule automobile, comme pendant le diagnostic, les calculateurs C1 à C4 émettent des signaux de transmission de données régulièrement sur le bus de communication 2. Les mesures sont effectuées pendant la transmission de ces signaux.

Lors d'une étape suivante 15, on compare des valeurs de tension mesurées à des seuils de tension déterminés en fonction de tensions d'alimentation, afin de déterminer un diagnostic éventuel de court-circuit entre un fil du bus de communication 2 et une alimentation générale de l'ensemble de commande.

En effet, en cas de court-circuit entre un fil 6, 7 du bus de communication 2 et la masse du véhicule ou un fil d'alimentation en énergie électrique, portée au potentiel de batterie $V_{bat}$, on pourra détecter qu'une tension mesurée est anormalement proche de la tension de batterie $V_{bat}$ ou de la tension nulle, et diagnostiquer en conséquence un court-circuit entre un fil 6,7 du bus de communication 2 et une alimentation générale de l'ensemble de commande. Cette étape sera détaillée par la suite.

Si aucun court-circuit entre un fil 6,7 du bus de communication 2 et une alimentation générale de l'ensemble de commande 1 n'est diagnostiqué, on passe à une étape suivante 16, lors de laquelle on compare les écarts entre les tensions maximales et minimales mesurées sur chaque fil du bus de communication 6, 7, entre eux et/ou avec des seuils déterminés, afin de déterminer un diagnostic d'ouverture sur un ou deux fils 6, 7 du bus de communication 2 au niveau de la prise extérieure 8.

En effet, en mesurant les écarts entre les tensions maximales et minimales des fils de haute tension 6 et de basse tension 7, on mesure en fait l'amplitude des signaux transmis sur chaque fil de haute tension 6 et de basse tension 7. Or, si un fil est coupé entre l'outil de diagnostic 9 et le raccordement de la prise 8 sur le bus de communication 2, les signaux mesurés sur le fil non coupé seront transmis à la portion de fil coupée par l'intermédiaire du dispositif de diagnostic 9 en étant altérés. Compte tenu de la résistance interne élevée du module de mesure 10, les signaux que l'on retrouve sur le fil coupé seront écrasés, c'est-à-dire que l'écart entre la tension maximale et la tension minimale mesurées sur le fil coupé sera faible. Cette étape sera mieux détaillée par la suite.

Ensuite, si aucune ouverture sur un fil ou les deux fils 6, 7 du bus de communication 2 au niveau de la prise extérieure 8 n'a été diagnostiquée, on passe à une étape suivante 17 lors de laquelle on compare les positions relatives des signaux transmis sur les fils 6, 7, en comparant les positions relatives des grandeurs électriques mesurées, c'est-à-dire les positions relatives des tensions maximales et minimales sur les fils de haute tension 6 et de basse tension 7, pour établir un diagnostic d'ouverture ou non sur les fils 6, 7 du bus de communication 2, ou de perte de masse d'un ou plusieurs calculateurs.

En effet, si un fil 6, 7 du bus de communication 2 est ouvert, les signaux de communication émis sur ce fil coupé ne pourront être transmis. Compte tenu des résistances électriques internes des calculateurs et du fil coupé, les signaux émis sur un fil seront transmis sur l'autre fil par l'intermédiaire des calculateurs en étant altérés et en se superposant aux signaux de communication normalement transmis sur l'autre fil, et vice-versa. Dès lors, les signaux apparents sur le fil coupé, résultants de la même superposition de signaux que sur le fil non coupé, avec des altérations de signaux différentes selon la position de la coupure dans le fil coupé, seront proches des signaux de communication transmis sur le fil non coupé. Dès lors, en comparant relatives de grandeurs caractéristiques mesurées, c'est-à-dire dans le mode de mise en oeuvre illustré les positions des tensions maximales et minimales mesurées, on peut détecter que les signaux sur un fil sont anormalement proches des signaux sur l'autre fil.

Par ailleurs, si un calculateur C1 à C4 perd sa masse, c'est-à-dire qu'il perd sa liaison avec la masse du véhicule automobile, ce calculateur passera par le bus de communication 2 pour trouver une nouvelle tension de référence, non nulle. Dès lors, on pourra détecter une position anormalement élevée d'une tension moyenne $V_{com}$ des fils 6 et 7.

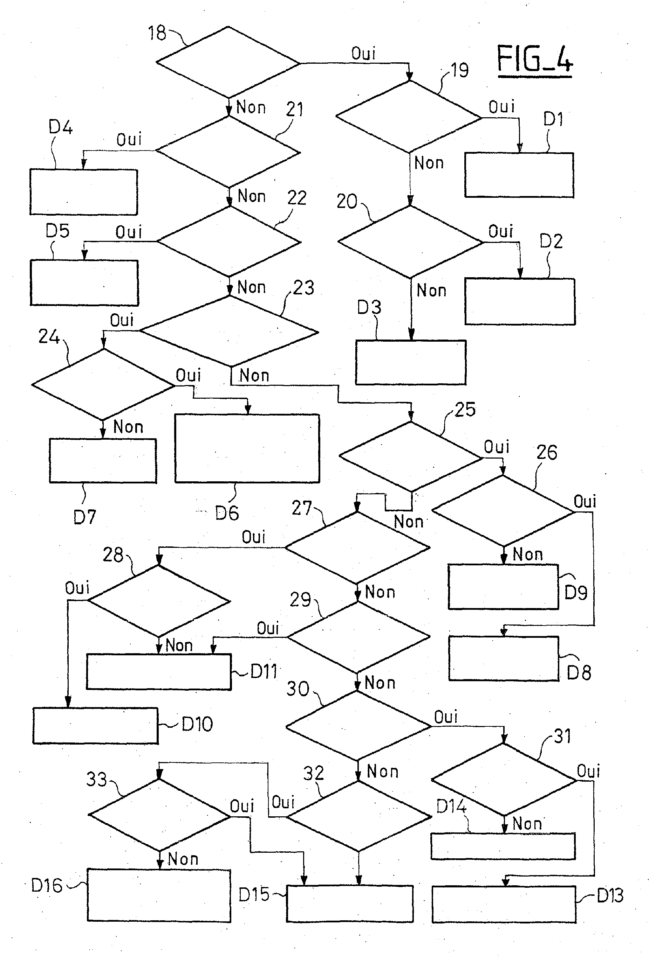

Sur la figure 4, on a détaillé des étapes intermédiaires de diagnostic et de caractérisation d'une défaillance du bus de communication 2 lors des étapes 15, 16 et 17. On conserve par la suite les références utilisées précédemment dans la description des figures 1 à 3.

Lors d'un test 18, le dispositif de diagnostic 9 essaie d'échanger des données avec des calculateurs C1 à C4 de l'ensemble de commande 1. Si le dispositif de diagnostic 9 ne peut échanger aucune donnée par l'intermédiaire du bus de communication 2, on passe à un test suivant 19, lors duquel on compare les tensions maximales $V_{Hmax}$, $V_{Lmax}$ mesurées sur les fils de haute tension 6 et de basse tension 7 du bus de communication 2, avec la tension de batterie $V_{bat}$ mesurée. Si l'une ou l'autre des tensions maximales $V_{Hmax}$, $V_{Lmax}$ est supérieure à la tension de batterie $V_{bat}$ pondérée par un coefficient $K_0$, déterminé à l'avance, par calcul ou par expérience, soit :

$$V_{Hmax} > K_0 \cdot V_{bat} \text{ ou } V_{Lmax} > K_0 \cdot V_{bat}$$

on détermine un diagnostic D1 de court-circuit entre le fil de haute tension 6 et le fil de basse tension 7 avec la batterie.

Sinon, on passe à un test suivant 20 lors duquel on compare la tension maximale $V_{Hmax}$ mesurée sur le fil de haute tension 6 avec un coefficient $K_1$ prédéterminé. Si la tension maximale $V_{Hmax}$ est inférieure à ce coefficient, soit :

$$V_{Hmax} < K_1$$

on détermine un diagnostic D2 de court-circuit entre le fil de haute tension 6 et la masse, sinon, on détermine un diagnostique D3 de court-circuit entre le fil de haute tension 6 et le fil de basse tension 7.

En revenant au test 18, si le dispositif de diagnostic 9 peut communiquer avec au moins un calculateur C1 à C4 par l'intermédiaire du bus de communication 2, on passe à un test suivant 21 lors duquel on compare la tension maximum $V_{Hmax}$ mesurée sur le fil de haute tension 6 à la tension de batterie $V_{bat}$ pondérée par le coefficient $K_0$. Si $V_{Hmax}$ est supérieure au produit de $K_0$ par $V_{bat}$, soit :

$$V_{Hmax} > K_0 \cdot V_{bat}$$

on détermine un diagnostique D4 de court-circuit entre le fil de haute tension 6 et la batterie $V_{bat}$. Sinon, on passe à un test suivant 22 lors duquel on compare la tension maximale $V_{Lmax}$ mesurée sur le fil de basse tension 7 avec le coefficient $K_1$. Si $V_{Lmax}$ est inférieure à $K_1$, soit :

$$V_{Lmax} < K_1$$

on détermine un diagnostic D5 de court-circuit entre le fil de basse tension 7 et la masse, sinon on passe à un test suivant 23 faisant partie de l'étape 16.

Lors du test 23, on compare l'écart entre les tensions maximales et minimales sur le fil de haute tension 6, $V_{Hmax}$-$V_{Hmin}$, à un coefficient $K_2$ et l'écart entre les tensions maximales et minimales mesurées sur le fil de basse tension 7, $V_{Lmax}$-$V_{Lmin}$, et un coefficient $K_3$. Si l'écart $V_{Hmax}$-$V_{Hmin}$ est inférieur à $K_2$ et si l'écart $V_{Lmax}$-$V_{Lmin}$ est inférieur à $K_3$, soit :

$$V_{Hmax} - V_{Hmin} < K_2 \text{ et } V_{Lmax} - V_{Lmin} < K_3$$

on passe à un test suivant 24. Sinon, on passe à un test suivant 25.

Lors du test 24, le dispositif de diagnostic 9 vérifie s'il peut émettre des données sur le bus de communication 2. S'il peut émettre des données, on détermine un diagnostic D6 de circuit ouvert sur le fil de haute tension 6 et le fil de basse tension 7 de la prise extérieure 8. Sinon on détermine un diagnostique D7 indiquant qu'une communication sur le bus de communication 2 n'est pas possible.

Lors du test 25, on compare l'écart entre les tensions maximale et minimale mesurées sur le fil de basse tension 7, $V_{Lmax}$-$V_{Lmin}$, avec l'écart entre les tensions maximale et minimale mesurées sur le fil de haute tension 6, $V_{Hmax}$-$V_{Hmin}$, pondéré par un coefficient $K_4$. Si l'écart sur le fil de basse tension 7, $V_{Lmax}$-$V_{Lmin}$, est inférieur à l'écart mesuré sur le fil de haute tension $V_{Hmax}$-$V_{Hmin}$ multiplié par le coefficient $K_4$, soit :

$$V_{Lmax} - V_{Lmin} < K_4 \cdot (V_{Hmax} - V_{Hmin})$$

on passe à un test suivant 26, sinon on passe à un test suivant 27.

Lors du test 26, on vérifie que le dispositif de diagnostic 9 peut émettre sur le bus de communication 2. S'il peut émettre, on détermine un diagnostic D8 de circuit ouvert sur la prise extérieure 8, sur le fil de basse tension 6. Sinon, on détermine un diagnostique D9 d'erreur interne au dispositif de diagnostic 9 ou un écart de masse et un court-circuit entre le fil de basse tension 7 et la masse.

Lors du test 27, on compare l'écart entre les tensions maximale et minimale mesurées sur le fil de haute tension 6, $V_{Hmax}$-$V_{Hmin}$ avec l'écart entre les tensions maximale et minimale mesurées sur le fil de basse tension 7, $V_{Lmax}$-$V_{Lmin}$, pondéré par le coefficient $K_4$. Si l'écart sur le fil de haute tension 6, $V_{Hmax}$-$V_{Hmin}$, est inférieur à l'écart sur le fil de basse tension 7, $V_{Lmax}$-$V_{Lmin}$, multiplié par $K_4$, soit :

$$V_{Hmax} - V_{Hmin} < K_4 \cdot (V_{Lmax} - V_{Lmin})$$

on passe à un test suivant 28, sinon on passe à un test suivant 29.

Lors du test 28, le dispositif de diagnostic 9 vérifie qu'il peut émettre correctement sur le bus de communication 2. S'il peut émettre, on détermine un diagnostic D10 de circuit ouvert au niveau de la prise extérieure 8, sur le fil de haute tension 6. Sinon, on détermine un diagnostic D11 d'erreur interne du dispositif de diagnostic 9.

Lors du test 29, le dispositif de diagnostic 9 vérifie qu'il peut émettre correctement sur le bus de communication 2. S'il peut émettre, on détermine un diagnostic D11 d'erreur interne du dispositif de diagnostic 9. Sinon, on passe à un test suivant 30 faisant partie de l'étape suivante 14 du procédé de diagnostic.

Pour l'étape de diagnostic 17, on détermine une tension moyenne du bus de communication mesurée sur les fils de haute tension 6 et de basse tension 7. Par exemple, on détermine la tension moyenne $V_{com}$ comme étant égale à la moitié de la somme de la tension maximale $V_{Hmax}$ mesurée sur le fil de haute tension 6 et de la tension minimale $V_{Lmin}$ mesurée sur le fil de basse tension 7, soit :

$$V_{com} = \frac{V_{Hmax} + V_{Lmin}}{2}$$

On détermine également une amplitude A du bus de communication comme étant égale à la tension maximale mesurée $V_{Hmax}$ mesurée sur le fil de haute tension 6 moins la tension moyenne $V_{com}$, soit :

$$A = V_{Hmax} - V_{com}$$

Ensuite, dans un test 30, on compare la position de la tension maximale $V_{Lmax}$ mesurée sur le fil de basse tension avec la tension moyenne $V_{com}$, en fonction de l'amplitude A. En effet, lors de cette étape, on cherche à caractériser une ouverture sur un fil du bus de communication 2.

En fonctionnement normal, dans l'exemple décrit plus haut, la tension maximale $V_{Lmax}$, mesurée sur le fil de basse tension 7, doit être sensiblement égale ou inférieure à la tension moyenne $V_{com}$. Si cette tension maximale $V_{Lmax}$ est supérieure à $V_{com}$, cela peut indiquer que la tension $V_{Lmax}$ est décalée par rapport à la tension moyenne $V_{com}$, ce qui indique un décalage des signaux du fil de basse tension 7 vers les signaux du fil de haute tension 6. On réalise une comparaison avec l'amplitude A mesurée entre les signaux sur les fils de haute tension 6 et de basse tension 7 pour connaître l'importance du décalage relatif des signaux, par rapport à l'amplitude des signaux sur chaque fil.

Si la différence entre la tension maximale $V_{Lmax}$ mesurée sur le fil de basse tension 7 et la tension moyenne $V_{com}$ est supérieure à l'amplitude A pondérée par un coefficient déterminé $K_6$, soit :

$$V_{Lmax} - V_{com} > K_6 \cdot A$$

alors on passe à un test suivant 31, sinon on passe à un test suivant 32.

Lors du test 31, on compare la tension minimale $V_{Hmin}$ mesurée sur le fil de haute tension 6 avec un coefficient $K_7$. Si $V_{Hmin}$ est supérieure à $K_7$, soit :

$$V_{Hmin} > K_7$$

On détermine un diagnostic D13 de perte de masse, sinon on détermine un diagnostic D14 d'ouverture sur le fil de basse tension 7 du bus de communication 2.

Lors du test 32, on compare la différence entre la tension moyenne $V_{com}$ et la tension minimale $V_{Hmin}$ mesurée sur le fil de haute tension 6 avec l'amplitude A pondérée par un coefficient $K_8$ : soit :

$$V_{com} - V_{Hmin} > K_8 \cdot A$$

Si le test 32 est positif, on passe au test 33, sinon on détermine un diagnostic D15 de bus de communication 2 en bon état de fonctionnement.

Lors du test 33, on compare la tension moyenne avec la tension maximale $V_{Lmax}$ mesurée sur le fil de basse tension 7. En particulier, on compare l'écart entre $V_{com}$-$V_{Lmax}$ et l'amplitude A pondérée par un coefficient $K_9$ déterminé, soit :

$$V_{com} - V_{Lmax} > K_9 \cdot A$$

Si ce test est positif, on détermine un diagnostic D15 de bus de communication 2 en bon état de fonctionnement. Sinon, on détermine un diagnostic D16 d'ouverture sur le fil de haute tension 6 du bus de communication 2.

Dans le cas où le bus de communication 2 est défaillant, mais certains calculateurs peuvent communiquer entre eux par l'intermédiaire du bus de communication 2, on peut recouper les informations obtenues lors de l'étape 13 et des étapes 15 à 17 pour déterminer la localisation de la défaillance caractérisée.

En effet, lors de l'étape 13, le dispositif de diagnostic 9 interroge chaque calculateur C1 à C4 pour savoir quels sont les autres calculateurs avec lesquels il peut communiquer par l'intermédiaire du bus de communication 2. En fonction du nombre de communications passant par une section du bus de communication 2 tentées et du nombre de communications échouées, on peut déterminer, pour chaque section une probabilité que la défaillance se produise dans cette section. Pour se faire, il est préférable de connaître l'architecture du réseau de communication de l'ensemble de commande 1. On peut prévoir de récupérer l'architecture stockée dans un calculateur ou de récupérer l'architecture sur une base de données extérieure au véhicule automobile.

La localisation de la défaillance peut être déterminée avec certitude dans le cas de schémas de câblage simples, notamment dans le cas de câblage du type comprenant une bus de communication principal, auquel chaque calculateur est directement relié par une dérivation.

En outre, en connaissant une caractérisation de la défaillance, on peut savoir où la défaillance se situe. En effet, s'il s'agit d'une défaillance du type fil ouvert, court-circuit entre les fils, ou court-circuit entre un fil et la masse ou la batterie, on sait qu'un calculateur n'est pas en cause. Par contre, s'il s'agit d'un défaut de perte de masse, on sait que la défaillance se situe au niveau du calculateur lui-même.

Par exemple, en revenant à la figure 1, si on sait que le calculateur C1 peut communiquer avec le calculateur C3 et le calculateur C4, mais pas avec le calculateur C2, cela signifie que le bus de communication 2 est défaillant au niveau de la prise 4, entre la prise 4 et son raccordement sur le bus de communication 2, ou entre la prise 4 et le calculateur C2, ou que le calculateur C2, lui-même, est défaillant. S'il s'agit d'un défaut de perte de masse, cela signifie que le calculateur C2 est défaillant. Sinon, c'est la prise 4 qui est défaillante.

Dans le cas d'un défaut du type court-circuit d'un fil 6, 7 du bus de communication 2 avec l'autre fil 6, 7, la masse ou la batterie, une communication entre le dispositif de diagnostic 9 et les calculateurs C1 à C4 n'est pas possible. Dès lors, la mise en oeuvre de l'étape 13 n'est pas possible. On peut néanmoins localiser la section défaillante en procédant par itérations.

Pour ce faire, en fonction du schéma de l'arborescence entre les calculateurs C1 à C4, récupéré au préalable, le dispositif de diagnostic 9 peut proposer de débrancher certains secteurs du bus de communication 2, puis effectuer à nouveau un diagnostic du bus de communication 2 et des calculateurs encore reliés au bus de communication 2, en tenant compte du nouveau schéma de câblage résultant du schéma de câblage initial auquel on a débranché un premier secteur ou section pour vérifier si la défaillance est bien localisée dans le secteur débranché.

Si la défaillance est encore détectée lors de la mise en oeuvre du procédé de diagnostic sur l'ensemble restant, cela signifie que la défaillance n'est pas localisée dans le premier secteur débranché. Un opérateur rebranche le premier secteur à l'ensemble de commande. Le dispositif de diagnostic 9 propose ensuite à un opérateur de débrancher un autre secteur, puis met en oeuvre à nouveau le procédé de diagnostique sur l'ensemble restant. On renouvèle l'opération jusqu' à ne plus détecter de défaut dans l'ensemble restant, ce qui signifie que l'on a débranché le secteur où la défaillance est localisée.

Si la défaillance n'est plus détectée, cela signifie que la défaillance était localisée dans le secteur débranché. Dès lors, on peut reconnecter ledit secteur et puis débrancher une sous-section du secteur et procédé à nouveau au diagnostic de l'ensemble restant. On procède ainsi par itérations pour localiser avec précision la portion défaillante de l'ensemble de commande.

Dans les étapes du procédé de diagnostic, on a évoqué des coefficients $K_0$ à $K_9$ permettant de déterminer des seuils ou des coefficients de pondération. Ces coefficients seront déterminés en fonction du bus de communication 2 spécifique utilisé, afin d'obtenir des seuils de comparaison permettant de caractériser les défaillances du bus de communication 2 de façon robuste.

Grâce à la présente invention, on peut détecter, localiser et

caractériser une défaillance dans ensemble de commande comprenant un bus de communication reliant des calculateurs, en interrogeant les calculateurs directement par l'intermédiaire du bus de communication, sans utiliser de bus de diagnostique parallèle. La détection, la localisation et la caractérisation de la défaillance sont possible, bien que les calculateurs ne soient pas dédiés à la gestion d'un équipement particulier, mais gèrent collectivement une pluralité d'équipements, notamment des équipements embarqués dans un véhicule automobile.

Une mise en oeuvre itérative du procédé de diagnostic permet en outre de pouvoir localiser une défaillance du bus de communication ou d'un calculateur relié au bus de communication, même dans le cas où aucune communication n'est possible par l'intermédiaire du bus de communication.

Le procédé permet en outre de caractériser une défaillance du bus de communication par l'intermédiaire de mesures de grandeurs électriques indépendamment sur chacun des fils du bus de communication, même dans le cas où une transmission de données par l'intermédiaire bus de communication n'est pas possible.

## Revendications

1. Procédé de diagnostic d'un ensemble de commande (1), notamment pour véhicule automobile, comprenant une pluralité de calculateurs (C1, ..., C4) reliés entre eux par un bus de communication (2), **caractérisé par le fait que** l'on interroge chaque calculateur (C1, ..., C4) par l'intermédiaire du bus de communication pour déterminer quels sont les autres calculateurs avec lesquels ledit calculateur (C1, ..., C4) peut échanger des données par l'intermédiaire du bus de communication (2).

2. Procédé selon la revendication 1, **caractérisé par le fait que** l'on détermine une section de l'ensemble de commande comme défaillante en fonction du nombre de communications entre calculateurs (C1, ..., C4) devant transiter par cette section, et du nombre de communications effectivement établies.

3. Procédé selon l'une quelconque des revendications 1 ou 2, **caractérisé par le fait que** le bus de communication (2) est du type bifilaire différentiel, et que pendant des transmissions de données par l'intermédiaire du bus de communication (2), on effectue des mesures de grandeurs électriques caractéristiques indépendamment sur chacun des fils (6, 7) du bus de communication (2), pour caractériser une défaillance éventuelle du bus de communication (2).

4. Procédé selon la revendication 3, **caractérisé par le fait qu'**on mesure les tensions maximales ($V_{Hmax}$, $V_{Lmax}$) et minimales ($V_{Hmin}$, $V_{Lmin}$) sur les fils (6, 7) du bus de communication (2).

5. Procédé selon l'une quelconque des revendications 2 ou 3, **caractérisé par le fait qu'**on effectue des mesures pendant un intervalle de temps supérieur à une période caractéristique des signaux de communication transmis par le bus de communication (2), et on effectue une moyenne des mesures réalisées pendant l'intervalle de temps.

6. Procédé selon l'une quelconque des revendications 3 à 5, **caractérisé par le fait qu'**on compare des valeurs de tension mesurées ($V_{Hmax}$, $V_{Lmax}$) à des seuils de tension déterminés en fonction de tensions d'alimentation ($K_0 V_{bat}$, $K_1$).

7. Procédé selon l'une quelconque des revendications 3 à 6, on en compare des écarts entre des tensions maximales et minimales ($V_{Hmax}$-$V_{Hmin}$, $V_{1max}$-$V_{Lmin}$) mesurées sur chaque fil (6, 7) du bus de communication (2), entre eux ou avec des seuils déterminés.

8. Procédé selon l'une quelconque des revendications 3 à 7, **caractérisé par le fait que** l'on compare des positions relatives des signaux de transmission de données transmis par les fils (6, 7) du bus de communication.

**9.** Procédé selon l'une quelconque des revendications 3 à 8, **caractérisé par le fait qu'**on compare des tensions maximales et minimales mesurées sur les fils (6, 7) du bus de communication (2) avec une tension moyenne ($V_{com}$) du bus de communication.

**10.** Procédé selon l'une quelconque des revendications 3 à 9, **caractérisé par le fait qu'**on compare la différence entre des tensions maximales et minimales mesurées ($V_{Hmax}$, $V_{Lmax}$, $V_{Hmin}$, $V_{Lmin}$) et une tension moyenne ($V_{com}$) mesurée du bus de communication (2) avec une amplitude (A) mesurée du bus de communication (2).

**11.** Procédé selon la revendication 10, **caractérisé par le fait qu'**on détermine une amplitude (A) comme égale à différence entre la tension maximale ($V_{Hmax}$) mesurée sur un fil de haute tension (6) du bus de communication (2) et une tension moyenne ($V_{com}$) mesurée du bus de communication (2).

**12.** Procédé selon l'une quelconque des revendications 8 à 11, **caractérisé par le fait qu'**on détermine une tension moyenne ($V_{com}$) du bus de communication comme la moitié de la somme d'une tension maximale ($V_{Hmax}$) mesurée sur un fil de haute tension (6) et d'une tension minimale ($V_{Lmin}$) mesurée sur un fil de basse tension (7) du bus de communication (2).

**13.** Procédé selon l'une quelconque des revendications précédentes, **caractérisé par le fait que**, en cas de défaillance du bus de communication (2) interdisant une transmission de données par l'intermédiaire du bus de communication (2), on débranche une section du bus de communication (2), et on réitère le procédé de diagnostic en tenant compte de la section débranchée.

**14.** Dispositif de diagnostic pour un ensemble de commande (1), notamment pour véhicule automobile, comprenant une pluralité de calculateurs (C1, ..., C4) reliés entre eux par un bus de communication (2) bifilaire du type différentiel, **caractérisé par le fait qu'**il comprend un module de mesure de grandeurs électriques (11) sur chacun des fils (6, 7) du bus de communication (2), et un module de diagnostic (12) comprenant des moyens-mémoire sur lesquels est stocké un programme d'ordinateur comprenant des étapes de logiciel pour la mise en oeuvre d'un procédé de diagnostic selon l'une quelconque des revendications précédentes.

FIG_1

## FIG_2

# FIG_3

FIG_4

**Office européen des brevets**

**RAPPORT DE RECHERCHE EUROPEENNE**

Numéro de la demande

EP 03 29 2250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 390 326 A (SHAH NITIN J) 14 février 1995 (1995-02-14) * colonne 4, ligne 44 - colonne 5, ligne 55 * --- | 1 | G05B19/042 G05B23/02 |
| A | DE 100 48 144 A (WILHELM UWE ;DOHMANN AXEL (DE)) 18 avril 2002 (2002-04-18) * colonne 2, ligne 63 - colonne 4, ligne 14 * --- | 1 | |
| A | US 2002/062460 A1 (OKUDA KAZUYUKI) 23 mai 2002 (2002-05-23) * colonne 2, ligne 10 - colonne 3, ligne 15 * --- | 1 | |
| A | US 5 357 518 A (PETER CORNELIUS) 18 octobre 1994 (1994-10-18) * colonne 4, ligne 12 - colonne 5, ligne 37 * --- | 1 | |
| A | US 4 356 546 A (WHITESIDE ARLISS E ET AL) 26 octobre 1982 (1982-10-26) * revendication 1 * --- | 1 | **DOMAINES TECHNIQUES RECHERCHES (Int.Cl.7)** G05B G07C |
| A | WO 02 39645 A (JONES NICOLAS D L ;MONTGOMERY STEVEN R (CA); GRAHAM ROBERT (CA); W) 16 mai 2002 (2002-05-16) ----- | 1 | |

Le présent rapport a été établi pour toutes les revendications

| Lieu de la recherche | Date d'achèvement de la recherche | Examinateur |
|---|---|---|
| LA HAYE | 28 octobre 2003 | Kelperis, K |

EPO FORM 1503 03.82 (P04C02)

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**ANNEXE AU RAPPORT DE RECHERCHE EUROPEENNE
RELATIF A LA DEMANDE DE BREVET EUROPEEN NO.**

EP 03 29 2250

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-10-2003

| Document brevet cité au rapport de recherche | | Date de publication | Membre(s) de la famille de brevet(s) | | Date de publication |
|---|---|---|---|---|---|
| US 5390326 | A | 14-02-1995 | AUCUN | | |
| DE 10048144 | A | 18-04-2002 | DE | 10048144 A1 | 18-04-2002 |
| US 2002062460 | A1 | 23-05-2002 | JP | 2002158668 A | 31-05-2002 |
| | | | DE | 10156417 A1 | 23-05-2002 |
| US 5357518 | A | 18-10-1994 | DE | 3826774 A1 | 08-02-1990 |
| | | | WO | 9001739 A1 | 22-02-1990 |
| | | | DE | 58907696 D1 | 23-06-1994 |
| | | | EP | 0382794 A1 | 22-08-1990 |
| | | | JP | 2752487 B2 | 18-05-1998 |
| | | | JP | 3500477 T | 31-01-1991 |
| | | | KR | 135631 B1 | 15-06-1998 |
| US 4356546 | A | 26-10-1982 | AUCUN | | |
| WO 0239645 | A | 16-05-2002 | AU | 2694502 A | 21-05-2002 |
| | | | WO | 0239645 A2 | 16-05-2002 |
| | | | US | 2003144806 A1 | 31-07-2003 |
| | | | US | 2002059040 A1 | 16-05-2002 |

EPO FORM P0460

Pour tout renseignement concernant cette annexe : voir Journal Officiel de l'Office européen des brevets, No.12/82